# EUROPEAN PATENT SPECIFICATION

(11) **EP 3 109 715 B1**
(45) Date of publication and mention of the grant of the patent: **20.10.2021**
(21) Application number: 15173692.3
(22) Date of filing: 24.06.2015
(51) Int. Cl.: G05B 17/02, G05B 19/042

(54) **SYSTEM FOR OPERATION AND CONTROL OF A PLURALITY OF POWER GENERATING UNITS**
SYSTEM ZUM BETRIEB UND ZUR STEUERUNG EINER VIELZAHL VON ENERGIEERZEUGUNGSEINHEITEN
SYSTÈME DE FONCTIONNEMENT ET DE COMMANDE D'UNE PLURALITÉ D'UNITÉS DE GÉNÉRATION D'ÉNERGIE

(43) Date of publication of application: 28.12.2016
(73) Proprietor: Siemens Energy Global GmbH & Co. KG, 81739 München (DE)
(72) Inventor: Bredekamp, Adriaan Hendrik, 76344 Eggenstein-Leopoldshafen (DE); Schoch, Thomas, 76275 Ettlingen (DE)

(56) References cited:
- WO-A1-2011/150929
- US-A1- 2005 198 241
- US-A1- 2005 251 806
- US-A1- 2011 029 140
- None

## Description

The invention is related to a system for operation and control of a plurality of power generating units.

For control of a large power plant usually a central, hierarchically structured process control system is used for operation, control and monitoring of the technical installation. Such a power plant automation system commonly comprises one or more process control computers, a number of client computers, several bus systems for communication and a number of automation and field devices arranged close to or in the technical installation.

The process control computer usually has a web server being used to set up a connection to the Internet. The process control computer is operated using a realtime operating system, which means that the processing operations taking place in the process control computer are deterministic, so that it is known in advance and it is certain within which time interval a particular processing operation can be performed with certainty. This means that the process control computer can also implement time-critical functions, for which a deterministic program response from the control software is indispensable. The functions of the control software which are implemented in the process control computer and also the monitoring of the process data which are fundamental to operation of the technical installation are performed primarily by means of the client computer, which comprises an Internet browser for connection to the Internet.

For example, WO 2011/150929 A1 refers to a wind power computer system and a method for controlling and/or monitoring a wind power plant. US 2005/198241 A1 relates to a Web server comprising integrated automation functionality and access to a realtime operating system.

In former times control systems were strictly hierarchically structured: There was a plurality of automation devices (e.g. a PLC) at the automation level near the field. Those field devices are connected to automation servers being again connected to a profibus network transmitting signals to the next higher hierarchical level, the operator control and monitoring system. Furthermore, there can additionally be a separate diagnosis system which is used to monitor the operating state of the technical installation particularly the critical operating states.

In addition, such process control systems are not very flexible, inter alia on account of the high level of specialization of its subsystems. There are mostly used for large power plants such as for example a fossile steam power plant.

The change in the field of energy generation, however, takes place from central energy generation by large power plants towards distributed energy generation in connection with the integration of renewable energy sources. This also leads to a change of the configuration of the control system. Furthermore an increasing demand on condition monitoring and diagnostics of the distributed power units and plants is observed. At the same time the power generating units have become smaller (wind turbines, solar fields, bio-gas plants) such that there is a need of also small and compact controls near the field devices.

Additionally stand-alone solutions which allow a seamless integration in larger distributed control systems are needed. The many different smaller power plants (wind, solar, bio-gas etc.) can thus be connected together so that it acts as a single power plant which uses one distributed control system (DCS). This is also called a virtual power plant or multi power plant.

There is a need for a system and a method for better integral component for a diagnostic pre-processing close to the automation, which allows more efficient operation. Additionally cost effectiveness of existing diagnostics and automation devices shall be increased.

The solution of this problem is achieved by a system comprising features according to claim 1.

The inventive system for operation and control of a plurality of power generating units according to claim 1 comprises of an automation system and a diagnostic system combined to one device. Thus a combined system for diagnostics and automation is provided, which is assembled by at least one realtime component/module and at least one non-realtime component/module, which are connected by a communication link. The realtime component is connected to I/O modules in the field and works on a higher sampling rate than the non-realtime component. The realtime component is designed to execute both, diagnostics and automation tasks. The non-realtime component comprises of at least one virtual machine containing application software in their native operating system environment (meaning the operation system of the virtual machine) and being embedded in a host operating system.

Thus the inventive system is advantageously designed to integrate more diagnostic methods and applications into the hardware near the field and to provide an easy combination with automation. Additionally a smaller unit or device can be built that saves cost and space. All in all the system serves preferably as hardware platform for distributed generation which encompasses automation for small generation units (<30 MW, non-redundant), SCADA systems, Oil and Gas solutions, performance monitoring, multiple power stations (virtual power plant) and also for Plant & Fleet management solutions like a remote expert centre and maintenance management systems.

The inventive system is split into realtime and non-realtime processing on separate processors to optimize the use of the systems and to allow specific technologies like virtualization that would otherwise not be completely possible if realtime and non-realtime is used on the same hardware processor. This split allows a processing separation of application server (non-realtime), automation and diagnostics (realtime) while allowing a good communication connection between components and to the outside world.

The inventive system provides a solution to run cloud applications on field devices. This way diagnostic is brought as application close to the field, where data processing of the field data is preferably done in realtime at a higher sampling rate, such as 100 kHz. Even higher sampling rates also shall be possible.

In order to have hardware independence for cloud applications, virtualization is used. However, this makes the use of a realtime environment difficult. Typically the applications in the non-realtime environment are not dependant on a deterministic behavior (e.g. Database, webbrowsers, thin-client, data visualization anti-virus software) and they are not designed for a realtime environment. Only by combining realtime and non-realtime components even inconsistent seeming tasks can be fulfilled.

It must also be possible for cloud based applications to be swopped out or installed easily by just moving the virtual machine between a server farm and the field device. Typically the server farm would be used to configure and start the application before it is moved to the local device. The realtime hardware is not always perfectly suitable for a cloud environment and depending on the diagnostic method used, could have much higher processing needs. The signal acquisition and processing needs also a realtime environment as does the control algorithm that should provide a deterministic output. Because of these conditions partially excluding each other, the best solution is to provide a separate environment for each. This solution brings the cloud (virtual environment) together with the realtime environment and connects them by means of a communications link (typically serial based to reduce the volume of cabling needed. The interaction between a cloud that is now on the field level in a non-realtime environment and the realtime environment where the signals are acquired and processed provides the optimum performance. The realtime system acquires the signals, processes them in a plurality of diagnostic methods (e.g. vibration, partial discharge, end-winding etc.) and control algorithms before providing new output signals for the realtime system or inputs for the application software on the non-realtime module. Thus a reduction of latency (response) of the software because of software execution overhead of the virtualization is achieved.

Additionally the inventive system shows a higher integration of former two large computers (for automation and diagnosis) to one small device. In a preferred embodiment the realtime component comprises at least two processors at least one for execution of diagnostic tasks and at least one for execution of automation tasks, the processors being based on a cluster processor.

The advantage of combining everything into a single small unit is that the lower cost of large CPUs (processing power in GFlops/dollar) can be used to generate a software only solution for many processes. This means that many different diagnostic hardware types and also controller hardware types can be reduced to one. It also means that the cabling cost between many systems can be removed. The rack space needed with the associated reduction in cabinets need for automation and diagnostic system is reduced. The application server needed is also optimized in that this part is now covered by the non-realtime module. At the same time all signals are brought together which reduces communication delays between systems. This allows more dynamic processes to be automated and diagnosed since the system can react faster to changing processes. The different diagnostic and automation solutions are reduced to a processing, memory and communication bandwidth requirement.

In an further embodiment the communication link between the realtime component and the non-realtime component and/or the communication link between the I/O cards and the realtime component are high speed serial interfaces such as for instance a Serial Rapid I/O communication (SRIO) or a Peripheral Component Interconnect communication express (PCIe). For each interface either one of those data links can be used or even both (SRIO and PCI) can be combined. The advantage of high speed serial interfaces is that SRIO and PCIe links are much faster than Ethernet connections as to data transport and have less latency so that there are no delays on the realtime side. The advantage of having both types of high speed interfaces available for the IO cards is that a designer is not restricted and can choose a wider range of commercial off-the-shelf products. Choosing between link types also allows the realtime processing to be optimized.

In a further embodiment a hypervisor layer is interposed between the virtual machines and the host operating system of the non-realtime component. The advantage is that virtual machines of different suppliers can then be used.

In a further embodiment the communication of the virtual machines shall only take place over the communication application layer situated in the host operating system, even for communications between the virtual environments. The advantage of that embodiment is that additional security can be implemented in the communication application layer and that a uniform interface is created for communication between components.

In a further embodiment the non realtime component provides means for access to the internet and/or cloud environments. The advantage of leaving internet access on the non-realtime module is that an unexpected delay on the network will not influence the realtime environment. The security of the system is also easier to implement on the non-realtime side since many commercial solutions can be bought and installed.

In a further embodiment the inventive system encompasses at least one carrier card to hold the realtime and the non-realtime components and the IO cards. The advantage is a very compact design and that the realtime module can be expanded with ease with additional IO cards.

In a very advantageous embodiment the size of the system has a form factor of about 270 mm width × 162 mm depth × 120 mm height. The advantage of this form factor is that it allows three IO cards of type XMC to be installed next to each other. The width and length was chosen accordingly. The height was chosen such that two carriers, each with three XMC cards can be fitted. By fitting the system in the mentioned dimensions, downsizing of common control systems is achieved providing highest flexibility for the usage.

Preferably the inventive system can handle for the diagnostic processing a plurality of methods at the same time. The advantage is that the amount of hardware is reduced since only a single hardware is needed. Additionally the compact system reduces delays between former different systems to a minimum and thus more dynamic processes can be handled. As a result network connections between different systems (e.g. ProfiBus, Ethernet etc.) are removed which saves on engineering time, installation cost and space.

In a further preferred embodiment a plurality of communication channels to external servers and other devices can be made over the various external link interfaces (e.g. Ethernet, Profinet, RS-232, USB etc.) This shows the communication potential of the inventive system. By having Ethernet, ProfiNet, and various serial interfaces like RS-232 and USB available, and maybe combining it with an automation software as example, the inventive system is serving as a communication platform at the same time. It is then possible to have an automation server on the non-realtime part, while also doing diagnostic data acquisition and automation in parallel on the realtime part.

In the following text, an exemplary embodiment of the solution according to the invention is explained in more detail on the basis of the attached schematic drawing, wherein:

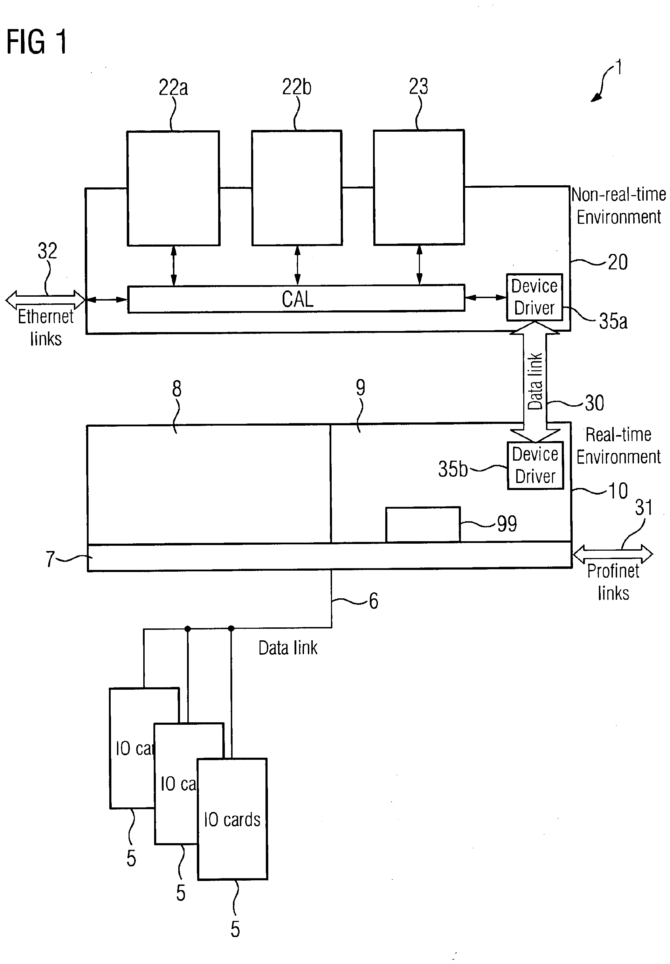

Fig.1 shows a schematic view of an exemplary embodiment of the inventive system for control of a plurality of energy generating units.
Fig. 2 shows an embodiment of a hardware realization of the inventive system.

The figure shows a block diagram illustrating components of a system 1 for control of a plurality of energy generating units. The inventive system 1 comprises of at least two modules. The first module is configured to be a realtime component 10, working on a realtime basis. This module is communicatively coupled or linked via a data link 30 such as a serial link to a non-real time module 20. The data link 30 between the two environments is associated with device drivers 35a and 35b on both sides.

Component 10 (the realtime component) is connected via a data link 6 to diagnostic I/O modules 5. Those Input/Output modules are realized this way, that they comprise of hardware extensions for realtime automation, such as common I/O modules with an integrated Digital Signal Processor (DSP) comprising a run-time environment. The diagnostic I/Os allow the processing of a plurality of signal channels. In this embodiment a number of 8 channels for one I/O module is advantageous. Per box a number of 6 modules can be realized with low effort.

The difference between a diagnostic I/O module and an automation I/O module lies in the sampling frequency of the input circuit and the amount of data transferred to the processing unit. However, the automation can also sample at the same sample data rate as the diagnostic I/O in the meantime which makes the difference smaller and only dependent on the volume of data transferred to the CPU. This is much higher in the case of diagnostic systems.

Component 10 consists of several processors which are put on a common infrastructure. In this embodiment the realtime component incorporates a system on a chip 7 (SoC) with a digital signal processor 8 (DSP). The digital signal processor (DSP) 8 processes the data streams from the IO channels 5 according to a plurality of algorithms. It can be used for data reduction for example. A means for a direct connection with I/O modules can be provided (coupling or plug-in mechanism). A second processor 9 is used for automation and diagnostic functions in this embodiment. The control processor 9, where the automation control algorithms are implemented, may integrate a so-called automation run-time controller 99, which is an embedded component such as a virtual machine including automation software. Since the component 10 consists of a plurality of smaller processors (multicore processors) of at least two different types, the communication delays between the systems is kept to a minimum. Typically these processors would use an operating system that provides a deterministic behavior (realtime). Diagnostic processing would typically be implemented on the DSP side due to the number crunching needed, and the automation on the control CPU side. To the external world the component 10 has data links to the IO cards (component 5) and to the non-realtime component 20. Further communication links 31 may exist (example: ProfiNet) for additional IOs.

Component 20 is an industrial PC. It consists of a CPU, a memory, a permanent storage like a Hard disk, a plurality of serial ports for internal and external communications like for instance (but not restricted to) Ethernet, RS-232, PCIe, USB. A display adapter is also part of the component so that a display can be attached. It is installed a common operating system such as a Linux operating system and contains data links such as Ethernet links 32 to the outside world where it can connect to external databases, the cloud and other components of the distributed control system.

The non-realtime module 20 comprises of at least one virtual machine 22a, 22b with an own operating system running the application software. The virtual machine offers a hardware-independent platform where for example cloud applications can be executed. The virtual machine can be put on a hypervisor application. The hypervisor presents guest operating systems with a virtual operating platform and manages the execution of the guest operating systems. In this embodiment the hypervisor runs on a conventional operating system like Linux or Windows. Then the hypervisor is embedded in Linux and the virtual machines are on top of the hypervisor. Additionally further virtual machines for application software can be provided and at least one further general runtime container 23.

The communication between the virtual machines and to the outside world is controlled by a communication application layer CAL that provides security, access control and traffic management between the various systems. The CAL provides a uniform interface and infrastructure for developers and eases integration of various systems that need to communicate with each other. A communication between the virtual machines also works without the communication application layer. In this case however security aspects can no more be fulfilled.

The operation system to be preferably used as host operating system is Linux. The advantage of using Linux is that is commercially available and of a high quality and very flexible.

Furthermore Linux has the advantage that it can be installed on the bare metal of carrier cards.

The data volume that is generated in the field is reduced by applying a plurality of data aggregation algorithms, which are mostly run in the realtime component 10. Thus the inventive system 1 shows also a high data reduction potential by having everything in one hardware system available before it is pushed onto the network and outside world. This is especially true for the diagnostic part where large volumes of data is generated but only the important characteristics of the signal is kept.

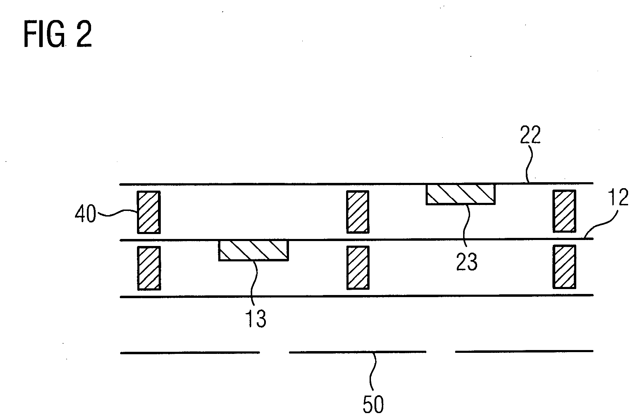

In Fig. 2 one embodiment for a hardware realization is shown. The inventive system can be realized by a number of electronic boards or carriers 12, 22 with certain processors 13 on it, the boards being separated by spacers 40 to provide better air circulation and more stability.

In this embodiment, there is a non-realtime board 22, which comprises a processor 23 such as an Intel i7 processor. The i7 board is installed with Linux and the various needed virtual machines which contains the application software. The connection to the realtime board 12 is over an PCI Express (PCIe). The realtime board 12 consists of a Texas Instruments SoC (system on a chip) with DSP (Digital Signal Processor) and ARM A15 processors 13 and external memory. The machine diagnostic algorithms are implemented on the DSP side where the high data processing capacity is and the automation on the ARM A15 side where the hardware is more suitable for control algorithms. Each processor type (DSP and ARM) uses a deterministic (realtime) operating system. The TI SoC provides SRIO (Serial Rapid 10) and PCI Express data links. The PCIe are shared with the non-realtime module but the SRIO is dedicated to the data acquisition boards. The IO boards 50 are complying with the ANSI VITA 42 standard using the XMC mezzanine form factor for Serial Rapid IO and PCI Express 10. The data acquisition implementation uses 102,4kHz as sampling rate but can also be swopped for commercial off the shelf (COTS) products with different types of IO or different sampling rates. Up to two carrier cards, each with 3 acquisition cards can be stacked in this implementation. The IO could also contain a processing element like an FPGA to implement further pre-processing functions like digital filters as one example before sending data to the DSP for processing.

The inventive system can be added to an industrial PC so that the temperature specification for a field device is complied too.

## Claims

1. System (1) for operation, control and diagnostics of a plurality of power generating units
comprising an automation system and a diagnostic system combined to one device,
**characterized in**
**that** the device comprises
at least one module being a realtime component (10) and
at least one module being a non-realtime component (20), both modules being connected by a communication link (30),
the realtime component (10) being connected to I/O modules, the realtime component (10) working on a higher sampling rate than the non-realtime component (20),
the realtime component (10) being designed to execute both, diagnostics and automation tasks in realtime
and
the non-realtime component (20) comprising of at least one virtual machine (22a, 22b, 23) containing application software in their native operating system environment and being embedded in a host operating system,
and a hypervisor layer being interposed between the virtual machines (22a, 22b, 23) and the host operating system, wherein the hypervisor presents guest operating systems with a virtual operating platform and manages the execution of the guest operating systems.

2. System (1) according to claim 1,
**characterized in**
**that** the realtime component (10) comprises at least two processors (8, 9), at least one for execution of diagnostic tasks and at least one for execution of automation tasks, the processors (8, 9) being based on a cluster processor (7).

3. System (1) according to claim 1 or 2,
**characterized in**
**that** the communication link (30) and/or the communication link (6) is a high speed serial interface providing both: Serial Rapid I/O communication (SRIO) or Peripheral Component Interconnect communication Express (PCI).

4. System (1) according to one of the proceeding claims, **characterized in**
**that** communication of the virtual machines shall only be over the communication application layer (CAL) situated in the host operating system, even for communications between the virtual environments.

5. System (1) according to one of the proceeding claims, **characterized in**
**that** the non realtime component (20) provides means (32) for access to the internet and/or cloud environments.

6. System (1) according to one of the proceeding claims, **characterized in**
**that** the system encompasses at least one carrier card to hold the components (10, 20) and the IO cards.

7. System (1) according to one of the proceeding claims, **characterized in**
**that** the size of the system has a form factor of about 270 mm width × 162 mm depth × 120 mm height.

8. System (1) according to one of the proceeding claims, **characterized in**
**that** means for diagnostic processing are provided to handle a plurality of diagnostic methods at the same time.

9. System (1) according to one of the proceeding claims, **characterized in**
**that** a plurality of communication channels to external servers and other devices can be made over the various external link interfaces.

## Patentansprüche

1. System (1) zum Betrieb, zur Steuerung und zur Diagnose mehrerer Leistungserzeugungseinheiten,
umfassend ein Automatisierungssystem und ein Diagnosesystem, die zu einer Vorrichtung kombiniert sind,
**dadurch gekennzeichnet,**
**dass** die Vorrichtung Folgendes umfasst:
mindestens ein Modul, bei dem es sich um eine Echtzeitkomponente (10) handelt, und
mindestens ein Modul, bei dem es sich um eine Nicht-Echtzeitkomponente (20) handelt, wobei beide Module durch eine Kommunikationsverbindung (30) verbunden sind,
wobei die Echtzeitkomponente (10) mit E/A-Modulen verbunden ist,
wobei die Echtzeitkomponente (10) mit einer höheren Abtastrate als die Nicht-Echtzeitkomponente (20) arbeitet,
wobei die Echtzeitkomponente (10) dazu ausgestaltet ist, sowohl Diagnose- als auch Automatisierungsaufgaben in Echtzeit auszuführen,
und
wobei die Nicht-Echtzeitkomponente (20) aus mindestens einer virtuellen Maschine (22a, 22b, 23) besteht, die eine Anwendungssoftware in ihrer nativen Betriebssystemumgebung enthält und in einem Host-Betriebssystem eingebettet ist,
und wobei eine Hypervisor-Schicht zwischen den virtuellen Maschinen (22a, 22b, 23) und dem Host-Betriebssystem angeordnet ist,
wobei der Hypervisor Gastbetriebssystemen eine virtuelle Betriebsplattform bietet und die Ausführung der Gastbetriebssysteme verwaltet.

2. System (1) nach Anspruch 1,
**dadurch gekennzeichnet,**
**dass** die Echtzeitkomponente (10) mindestens zwei Prozessoren (8, 9) umfasst, von denen mindestens einer zur Ausführung von Diagnoseaufgaben vorgesehen ist und mindestens einer zur Ausführung von Automatisierungsaufgaben vorgesehen ist, wobei die Prozessoren (8, 9) auf einem Cluster-Prozessor (7) basiert sind.

3. System (1) nach Anspruch 1 oder 2,
**dadurch gekennzeichnet,**
**dass** es sich bei der Kommunikationsverbindung (30) und/oder der Kommunikationsverbindung (6) um eine serielle Hochgeschwindigkeitsschnittstelle handelt, die sowohl Serial Rapid I/O Communication (SRIO) als auch Peripheral Component Interconnect Communication Express (PCI) bereitstellt.

4. System (1) nach einem der vorhergehenden Ansprüche, **dadurch gekennzeichnet,**
**dass** eine Kommunikation in der virtuellen Maschine nur über die in dem Host-Betriebssystem gelegene Kommunikationsanwendungsschicht (CAL) erfolgt, selbst für Kommunikationen zwischen den virtuellen Umgebungen.

5. System (1) nach einem der vorhergehenden Ansprüche, **dadurch gekennzeichnet,**
**dass** die Nicht-Echtzeitkomponente (20) Mittel (32) zum Zugriff auf das Internet und/oder Cloud-Umgebungen bereitstellt.

6. System (1) nach einem der vorhergehenden Ansprüche, **dadurch gekennzeichnet,**
**dass** das System mindestens eine Trägerkarte zum Aufnehmen der Komponenten (10, 20) und der EA-Karten umfasst.

7. System (1) nach einem der vorhergehenden Ansprüche, **dadurch gekennzeichnet,**
**dass** die Größe des Systems einen Formfaktor von etwa 270 mm Breite × 162 mm Tiefe × 120 mm Höhe aufweist.

8. System (1) nach einem der vorhergehenden Ansprüche, **dadurch gekennzeichnet,**
**dass** Mittel zur Diagnoseverarbeitung bereitgestellt sind, um mehrere Diagnoseverfahren gleichzeitig zu bearbeiten.

9. System (1) nach einem der vorhergehenden Ansprüche, **dadurch gekennzeichnet,**
**dass** mehrere Kommunikationskanäle mit externen Servern und anderen Vorrichtungen über die verschiedenen externen Verbindungsschnittstellen hergestellt werden können.

## Revendications

1. Système (1) pour l'exploitation, la commande et le diagnostic d'une pluralité d'unités de production d'électricité comprenant un système d'automatisation et un système de diagnostic combiné en un seul dispositif,
**caractérisé en ce que**
le dispositif comprend
au moins un module qui est un composant (10) en temps réel et au moins un module qui est un composant (20) qui n'est pas en temps réel, les deux modules étant reliés par une liaison (30) de communication, le composant (10) en temps réel étant connecté à des modules d'entrée/sortie, le composant (10) en temps réel opérant à un taux d'échantillonnage plus grand que le composant (20) qui n'est pas en temps réel,
le composant (10) en temps réel étant conçu pour exécuter à la fois des diagnostics et des tâches d'automatisation en temps réel, et
le composant (20) qui n'est pas en temps réel comprenant au moins une machine (22a, 22b, 23) virtuelle contenant un logiciel dans leur environnement de système d'exploitation natif et étant incorporé dans un système d'exploitation hôte,
et une couche d'hyperviseur étant interposée entre les machines (22a, 22b, 23) virtuelles et le système d'exploitation hôte,
dans lequel l'hyperviseur présente des systèmes d'exploitation auxiliaires ayant une plateforme d'exploitation virtuelle et gère l'exécution des systèmes d'exploitation auxiliaires.

2. Système (1) suivant la revendication 1,
**caractérisé**
**en ce que** le composant (10) en temps réel comprend au moins deux processeurs (8, 9), l'un au moins pour l'exécution de tâches de diagnostic et l'un au moins pour l'exécution de tâches d'automatisation, les processeurs (8, 9) reposant sur un processeur (7) de groupe.

3. Système (1) suivant la revendication 1 ou 2,
**caractérisé**
**en ce que** la liaison (30) de communication et/ou la liaison (6) de communication est une interface série à grande vitesse donnant à la fois : une communication Serial Rapid I/O (SRIO) ou un Peripheral Component Interconnect communication Express (PCI).

4. Système (1) suivant l'une des revendications précédentes, **caractérisé**
**en ce que** la communication de la machine virtuelle doit être seulement par la couche (CAL) d'application de communication située dans le système d'exploitation hôte, même pour des communications entre les environnements virtuels.

5. Système (1) suivant l'une des revendications précédentes, **caractérisé**
**en ce que** le composant (20) qui n'est pas en temps réel donne des moyens (32) d'accès à l'internet et/ou à des environnements de nuage.

6. Système (1) suivant l'une des revendications précédentes, **caractérisé**
**en ce que** le système comprend au moins une carte support pour porter les composants (10, 20) et les cartes d'entrée/sortie.

7. Système (1) suivant l'une des revendications précédentes, **caractérisé**
**en ce que** la dimension du système a un facteur de forme d'environ 270 mm de largeur × 162 mm de profondeur × 120 mm de hauteur.

8. Système (1) suivant l'une des revendications précédentes, **caractérisé**
**en ce qu'**il est prévu des moyens de traitement de diagnostic pour traiter une pluralité de procédés de diagnostic en même temps.

9. Système (1) suivant l'une des revendications précédentes, **caractérisé**
**en ce qu'**une pluralité de canaux de communication vers des serveurs extérieurs et d'autres dispositifs peut être faite sur les diverses interfaces de liaison extérieures.
